(19) Europäisches Patentamt
European Patent Office
Office européen des brevets

(11) **EP 4 763 824 A1**

(12) **DEMANDE DE BREVET EUROPEEN**

(43) Date de publication:
24.06.2026 Bulletin 2026/26

(21) Numéro de dépôt: 25225066.7

(22) Date de dépôt: **18.12.2025**

(51) Classification Internationale des Brevets (IPC):
*C04B 35/26* (2006.01)   *C01G 49/00* (2006.01)
*C04B 35/626* (2006.01)   *H01F 1/00* (2006.01)
*H01F 1/34* (2006.01)

(52) Classification Coopérative des Brevets (CPC):
**C04B 35/265; C01G 49/00; C04B 35/62615;**
**C04B 35/6266; C04B 35/62675; H01F 1/344;**
C04B 35/63424; C04B 2235/3262;
C04B 2235/3277; C04B 2235/3279;
C04B 2235/3281; C04B 2235/3284;
C04B 2235/5409; C04B 2235/5436;
C04B 2235/5445;           (Cont.)

(84) Etats contractants désignés:
AL AT BE BG CH CY CZ DE DK EE ES FI FR GB
GR HR HU IE IS IT LI LT LU LV MC ME MK MT NL
NO PL PT RO RS SE SI SK SM TR
Etats d'extension désignés:
BA
Etats de validation désignés:
GE KH LA MA MD TN

(30) Priorité: 20.12.2024 FR 2414931

(71) Demandeurs:
• Exxelia
75011 Paris (FR)

• Centre National d'Etudes Spatiales
75001 Paris (FR)

(72) Inventeurs:
• RAVAGNANI, Christian
33600 PESSAC (FR)
• UI, Rémy Visna Paul
40210 LABOUHERE (FR)

(74) Mandataire: Lavoix
2, place d'Estienne d'Orves
75441 Paris Cedex 09 (FR)

(54) **PROCÉDÉ DE PRÉPARATION DE MATÉRIAUX MAGNÉTO-DIÉLÉCTRIQUES EN FERRITE POUR APPLICATION VUHF**

(57) La présente invention concerne un procédé de préparation d'un matériau ferrite, ledit procédé comprenant les étapes suivantes : une étape $S_1$ de broyage de particules de ferrite $P_1$ avec des billes de broyage $B_1$, pour obtenir des particules de ferrite $P_2$, le diamètre $d_{90}$ des particules de ferrite $P_2$ étant inférieur au diamètre $d_{90}$ des particules $P_1$, ladite étape $S_1$ étant effectuée à une énergie $E_1$ supérieure à 1,5 kWh/kg et une étape $S_2$ de broyage des particules de ferrite $P_2$ avec des billes de broyage $B_2$, pour obtenir des particules de ferrite $P_3$, le diamètre $d_{90}$ des particules de ferrite $P_3$ étant inférieur au diamètre $d_{90}$ des particules $P_2$, ladite étape $S_2$ étant effectuée à une énergie $E_2$ supérieure à 5 kWh/kg, et le diamètre des billes $B_1$ étant supérieur au diamètre des billes $B_2$.

L'invention concerne également un matériau magnéto-diélectrique ferrite obtenu par un tel procédé, destiné à utilisation dans la bande de fréquence VUHF.

(52) Classification Coopérative des Brevets (CPC):
(Cont.)C04B 2235/5454; C04B 2235/5463;
C04B 2235/604; C04B 2235/781; C04B 2235/782;
C04B 2235/785

**Description**

La présente invention a pour objet un procédé de préparation d'un matériau magnéto-diélectrique ferrite à partir de particules de ferrites. Elle a également pour objet un matériau magnéto-diélectrique ferrite ainsi obtenu. Un tel matériau peut être utilisé dans le domaine des communications pour la fabrication d'antennes, en particulier adaptées à fonctionner dans la bande des très hautes fréquences (VHF, « *very high frequency* » en anglais), comprise entre 30 MHz et 300 MHz, et ultra hautes fréquences (UHF, « *ultra high frequency* » en anglais) comprise entre 300 MHz et 3 GHz, ou VUHF.

Dans le domaine des communications, on observe que la miniaturisation d'une antenne constitue un enjeu majeur, spécialement pour des antennes fonctionnant en dessous du GHz. En effet, la taille d'une antenne est directement proportionnelle à la longueur d'onde du signal émis/reçu, et celle-ci est de l'ordre du mètre pour les fréquences VHF/UHF (VHF : 30 MHz à 300 MHz ; UHF : 300 MHz à 3000 MHz). Il n'est donc pas évident de réduire la taille d'une antenne dont la fréquence correspond à une longueur d'onde élevée, notamment de l'ordre du mètre.

Parmi les différentes stratégies employées pour réaliser une antenne miniature (c'est-à-dire petite devant la longueur d'onde), une couramment utilisée consiste à utiliser les propriétés diélectriques d'un matériau afin de concentrer les champs dans un volume plus réduit. L'utilisation de matériau diélectrique à forte constante diélectrique ($\varepsilon$') permet une réduction significative de la taille des antennes mais s'accompagne d'une baisse importante de performance (efficacité de rayonnement, bande passante) (R. K. Mongia, A. Ittipiboon, and M. Cuhaci, "Low profile dielectric resonator antenna using a very high permittivity material," Electron. Lett., Vol 30 N°17 (1994) 1362-1663).

Il a été montré ces dernières années que l'utilisation de matériaux magnétiques à forte perméabilité permettait de contourner cette limitation. En effet, l'utilisation de matériaux comme les ferrites ayant une perméabilité magnétique ($\mu$') élevée permettrait de réduire la taille des antennes tout en maximisant leur efficacité. En effet, bien que $\varepsilon$' ait un impact positif sur les pertes diélectriques et sur la quantité d'énergie stockée, il a été prouvé que $\varepsilon$' a aussi un impact négatif sur la bande passante et sur l'efficacité de l'antenne, et que $\mu$' a un effet opposé, c'est-à-dire un impact positif sur ces deux paramètres (M.A.C Niamien, S. Collardey, A. Sharaiha, K. Mahdjoubi, "Compact Expressions for Efficiency and Bandwidth of Patch Antennas Over Lossy Magneto-Dielectric Materials", IEEE antennas and wireless propaga. letters, 10 (2011) 63-66). Un autre avantage considérable est que si l'antenne est conservée à iso-dimension, un tel matériau permettrait d'augmenter les performances de l'antenne.

Sur les bandes de fréquence VUHF, les ferrites présentent usuellement des pertes magnétiques élevées les rendant inutilisables pour cette application. Cependant, il a été montré qu'il est possible de diminuer ces pertes en synthétisant ces ferrites à partir de poudres obtenues par co-précipitation et frittage à basse température (i.e. inférieures à 1000°C) (A. Saini, K. Rana, A. Thakur, P. Thakur, J-L. Mattei, P. Queffelec, "Low loss Composite nano ferrite with matching permittivity and permeability in UHF band", Materials Research Bulletin, 76, p. 94-99 (2016)). Ce procédé permet en effet l'obtention de nanoparticules, qui une fois frittées à basse température pour éviter la croissance des grains, permettent la fabrication de ferrites dont la microstructure est elle aussi nanométrique. Cela permettrait de se rapprocher d'une configuration de grain mono-domaine magnétique et d'éviter la contribution des parois magnétiques à la perméabilité (les pertes magnétiques sont alors limitées). Ce procédé par co-précipitation peut cependant être lourd et coûteux à mettre en place d'un point de vue industriel.

Pour ces raisons, la présente invention a pour un but de fournir un procédé de préparation d'un matériau permettant la fabrication d'antennes miniatures adaptées pour des utilisations dans des bandes de fréquences VHF et/ou UHF.

En particulier, la présente invention a pour but de fournir un procédé de préparation d'un matériau magnéto-diélectrique ferrite présentant de faibles pertes magnétiques sur les bandes de fréquences VHF et/ou UHF.

La présente invention a notamment pour but de fournir un tel procédé de préparation qui soit moins lourd et moins coûteux à mettre en place d'un point de vue industriel que les procédés actuels.

L'invention a donc pour objet un procédé de préparation d'un matériau magnéto-diélectrique ferrite, ledit procédé comprenant les étapes suivantes :

une étape $S_1$ de broyage de particules de ferrite $P_1$ avec des billes de broyage $B_1$, pour obtenir des particules de ferrite $P_2$,

le diamètre $d_{90}$ des particules de ferrite $P_2$ étant inférieur au diamètre $d_{90}$ des particules $P_1$,

ladite étape $S_1$ étant effectuée à une énergie $E_1$ supérieure à 1,5 kWh/kg, de préférence supérieure à 2 kWh/kg, de préférence supérieure à 2,5 kWh/kg, de préférence supérieure à 3 kWh/kg, et

une étape $S_2$ de broyage des particules de ferrite $P_2$ avec des billes de broyage $B_2$, pour obtenir des particules de ferrite $P_3$,

le diamètre $d_{90}$ des particules de ferrite $P_3$ étant inférieur au diamètre $d_{90}$ des particules $P_2$,

ladite étape $S_2$ étant effectuée à une énergie $E_2$ supérieure à 5 kWh/kg, de préférence supérieure à 5,5 kWh/kg, de préférence supérieure à 6 kWh/kg,

et le diamètre des billes $B_1$ étant supérieur au diamètre des billes $B_2$.

De préférence, le procédé selon l'invention est un procédé par voie humide.

Par particules de ferrites, on entend des particules composées d'oxyde de fer(III) et d'un ou plusieurs oxydes de métaux.

De manière préférée, dans le procédé selon l'invention, les particules de ferrite $P_1$ comprennent, préférentiellement consistent en, des particules d'oxyde de fer ($Fe_2O_3$) et d'un ou de plusieurs oxydes choisis parmi l'oxyde de nickel (NiO), l'oxyde de cobalt (CoO), l'oxyde de zinc (ZnO), l'oxyde de manganèse (MnO) et l'oxyde de cuivre (CuO). Les particules de ferrite $P_1$ présentent préférentiellement toutes la même composition d'oxydes.

Selon le procédé de l'invention, les broyages des étapes $S_1$ et $S_2$ sont effectués dans des broyeurs.

Par énergie E, on entend l'énergie effective transférée du broyeur vers les particules au cours des étapes de broyage, qui se définit de la manière suivante :

$$E = \frac{Enette}{m} \times t$$

avec $E_{nette}$ l'énergie nette qui correspond à l'énergie brute apportée au broyeur moins l'énergie consommée par ce broyeur lorsqu'il fonctionne à vide,

m la masse de particules dans l'enceinte du broyeur, et

t la durée du broyage.

Dans la description qui va suivre, l'énergie $E_1$ fera référence à l'énergie effective E de l'étape de broyage $S_1$ et l'énergie effective $E_2$ à celle de l'étape de broyage $S_2$.

Par « diamètre » d'une particule de ferrite $P_1$, $P_2$ ou $P_3$, on entend le « diamètre sphérique volumique équivalent ». Le diamètre sphérique volumique équivalent correspondant au résultat de la mesure de taille de ladite particule par la technique de la diffraction laser des particules (Laser Scattering Particle Size Distribution) décrite ci-dessous.

Par « diamètre $d_{90}$ », on entend que 90% des particules, en volume, ont un diamètre sphérique équivalent de valeur inférieur ou égal à la valeur de $d_{90}$.

Par « *diamètre $d_{50}$* », on entend que 50% des particules, en volume, ont un diamètre sphérique équivalent de valeur inférieure ou égale à la valeur de $d_{50}$.

Par « *diamètre $d_{10}$* », on entend que 10% des particules, en volume, ont un diamètre sphérique équivalent de valeur inférieure ou égale à la valeur de $d_{10}$.

Les valeurs des diamètres $d_{90}$, $d_{50}$ et $d_{10}$ ont été obtenus par analyse par la technique de la diffraction laser des particules (Laser Scattering Particle Size Distribution). A titre d'exemple d'une telle analyse, celle peut être réalisée à partir d'une suspension aqueuse de particules à l'aide d'un équipement Laser Scattering Particle Size Distribution Analyser Malvern model Mastersizer 3000. Pour les analyses des distributions de taille de particules selon l'invention, des échantillons (environ 5 mL) des suspensions aqueuses de poudre ferrite ont été prélevés à la fin du cycle de broyage avec une pipette. Pour la mesure, une petite portion de l'échantillon fraîchement prélevé à la fin du cycle de broyage a été introduite goûte à goûte dans la chambre de l'accessoire de mesure Hydro MV de l'équipement Malvern model Mastersizer 3000, contenant de l'eau déionisée, en attendant à chaque goûte introduite la stabilisation de la valeur d'obscuration, jusqu'à une valeur autour de 5% (baisse du niveau d'énergie du laser reçu par le détecteur à cause de l'introduction des particules dans la cellule de mesure par rapport au niveau d'énergie du laser incident). Les réglages de l'équipement utilisés pour la mesure sont :

- Vitesse d'agitation de la suspension : 2000rpm
- Ultrason : 0%
- Indice de réfraction des particules : 2,360
- Indice d'absorption des particules : 1,000
- Indice de réfraction des particules dans le bleu : 2,360
- Indice d'absorption des particules dans le bleu : 1,000
- Indice de réfraction du dispersant (eau) : 1,330
- Model de diffraction : Mie
- Model d'analyse : générale
- Sensitivité d'analyse : normale

*Obtention des particules de ferrite $P_1$*

Afin d'obtenir les particules de ferrite $P_1$, des matières premières sous forme de poudre d'oxydes et/ou de carbonates sont d'abord sélectionnées selon la composition du matériau ferrite magnéto-diélectrique souhaitée. Par exemple, on sélectionne les oxydes et carbonates suivants : $Fe_2O_3$, $Co_3O_4$, NiO, ZnO, $CuCO_3.xH_2O$, $MnCO_3$.

De préférence, ces oxydes et/ou carbonates sous forme de poudre sont pesés, puis simultanément mélangés et broyés pour former des poudres d'oxydes et/ou de carbonates intimement mélangées.

De préférence, le mélange et le broyage des oxydes et/ou carbonates sélectionnés sont effectués simultanément en voie aqueuse par/dans un broyeur à boulets, un tourne-jarre ou un broyeur à attrition.

Par exemple, le broyage dans un broyeur à boulets ou dans un tourne-jarre contenant des éléments de broyage (billes) en acier a lieu pendant une durée comprise entre 15 heures et 25 heures, de préférence entre 18 heures et 22 heures. En particulier, le broyage a lieu pendant 20 heures.

De préférence, les poudres d'oxydes et/ou de carbonates ainsi obtenues sont ensuite soumises à une étape de calcination, où la poudre d'oxydes et/ou carbonates mélangés et broyés est chauffée à haute température pour permettre la décomposition des carbonates et les réactions chimiques entre les oxydes pour former la phase ferrite désirée. Autrement dit, les particules de ferrite $P_1$ sont de préférence obtenues par une étape de calcination de poudres d'oxydes et/ou de carbonates. Avantageusement, la calcination est effectuée à une température comprise entre 800°C et 1100°C. Avantageusement, la calcination est effectuée pendant une durée allant de 2 heures à 4 heures. Ainsi, selon un mode de réalisation préféré, le procédé comprend une étape d'obtention des particules de ferrite $P_1$ telle que : les particules de ferrite $P_1$ sont obtenues par une étape de calcination de poudre d'oxydes et/ou de carbonates, ladite étape de calcination étant effectuée de préférence à une température allant de 800°C à 1100°C et, préférentiellement, pendant une durée allant de 2h à 4h.

Les particules obtenues en sortie de calcination peuvent éventuellement subir un second broyage, afin d'obtenir les particules de ferrites $P_1$.

Ce broyage est de préférence un broyage par voie humide dans un broyeur à boulets ou un broyeur tourne-jarre avec des billes d'acier. En particulier, ce broyage a lieu pendant une durée comprise entre 30 heures et 40 heures, de préférence entre 34 heures et 38 heures. Le deuxième broyage peut éventuellement être réalisé dans un broyeur à attrition.

Les particules de ferrites ainsi obtenues sont les particules de ferrite $P_1$. Avantageusement, le diamètre $d_{90}$ des particules $P_1$ est inférieur à 50 $\mu$m, de préférence inférieur à 40 $\mu$m, de préférence inférieur à 30 $\mu$m. Selon un mode de réalisation, le diamètre $d_{90}$ des particules $P_1$ est de 10 $\mu$m à 50 $\mu$m. De préférence, les particules de ferrite $P_1$ ont une surface spécifique d'au moins 2 $m^2/g$, de préférence d'au moins 2,5 $m^2/g$, de préférence d'au moins 3 $m^2/g$.

Par *« surface spécifique »,* on entend le rapport de la surface totale de l'ensemble des particules (en $m^2$) par la masse totale de l'ensemble desdites particules (en grammes).

La surface spécifique des poudres de particules a été mesurée par la méthode BET (Brunauer, Emmett and Teller Method) avec l'équipement « Micromeritics FlowSorb II 2300 ». Selon la méthode BET, la surface spécifique d'une poudre est calculée à partir du volume d'un gaz, dans le cas d'espèce un mélange 70% He - 30% $N_2$, qui est adsorbé à la surface d'une masse connue de cette poudre pendant la mesure. Pour la préparation de l'échantillon pour la réalisation des mesures de la surface spécifique, 5g de poudre ferrite $P_1$, $P_2$ ou $P_3$ issue respectivement du séchage des suspensions après les étapes de broyage, après calcination des matières premières, $S_1$ et $S_2$, ont été placées dans une étuve à 110°C pendant une nuit pour éliminer toute humidité. Pour la réalisation de la mesure, une cellule de mesure propre et sèche est pesée avant et après son remplissage par 5g de poudre de particules $P_2$ ou $P_3$ et mis dans l'emplacement de dégazage de l'équipement de mesure. La poudre y est maintenue à 250°C pendant 30 minutes pour éliminer toute humidité résiduelle et éventuellement d'autres molécules de gaz adsorbés à la surface de la poudre avant la mesure. Ensuite, la cellule de mesure est transférée à l'emplacement de mesure. Après la réalisation de la calibration de l'équipement, la mesure est effectuée.

### *Les broyages*

Le procédé selon l'invention comprend deux étapes $S_1$ et $S_2$ de broyage respectivement de particules de ferrite $P_1$ et $P_2$. De préférence, le broyage des particules $P_1$ de l'étape $S_1$ est un broyage à haute énergie. De préférence, le broyage des particules $P_2$ de l'étape $S_2$ est un broyage à haute énergie. Avantageusement, le broyage des particules $P_1$ de l'étape $S_1$ et le broyage des particules $P_2$ de l'étape $S_2$ sont des broyages à haute énergie.

Le broyage à haute énergie est un broyage permettant de préparer des matériaux nanostructurés.

On entend par « haute énergie », une énergie nette transmise au milieu de broyage supérieure à 1,5 kWh/kg lors de l'étape de broyage.

Selon le procédé de l'invention, les broyages à haute énergie des étapes $S_1$ et $S_2$ consistent à agiter respectivement les particules de ferrites $P_1$ et $P_2$ avec des billes de broyage dans une enceinte étanche. Sous l'effet des collisions et/ou frottements, les particules de ferrites se fracturent pour former des particules de taille inférieure. Lors des collisions et/ou frottements des billes sur les particules de ferrites $P_1$ ou $P_2$, il y a en effet un transfert d'énergie cinétique des billes de broyage vers les particules de ferrites pour entraîner la fracturation et la réduction de taille des particules.

On caractérise les broyages des étapes $S_1$ et $S_2$ par l'énergie E, respectivement énergies $E_1$ et $E_2$, qui correspond à l'énergie transférée du broyeur vers les particules :

$$E = \frac{Enette}{m} \times t$$

avec $E_{nette}$ l'énergie nette qui correspond à l'énergie brute apportée au broyeur moins l'énergie consommée par ce broyeur lorsqu'il fonctionne à vide,

m la masse de particules dans l'enceinte du broyeur, et
t la durée du broyage.

Avantageusement, les broyages des étapes $S_1$ et $S_2$ sont réalisés avec un broyeur à attrition sous des conditions favorisant au maximum le transfert d'énergie du broyeur vers la réduction effective de taille des particules.

En outre, le taux de remplissage du broyeur représente le volume occupé par les éléments de broyage (billes) par rapport au volume total de l'enceinte du broyeur.

De préférence, les broyages des étapes $S_1$ et $S_2$ ont indépendamment un taux de remplissage inférieur à 75%, de préférence inférieur à 70%, de préférence inférieur à 65%.

Avantageusement, les billes de broyage $B_1$ et $B_2$ utilisées respectivement pour les broyages des étapes $S_1$ et $S_2$ sont des billes d'oxyde de zirconium. En particulier, les billes $B_1$ et $B_2$ sont des billes d'oxyde de zirconium, ou zircone, de formule $ZrO_2$. De préférence, les billes $B_1$ et $B_2$ sont des billes de zircone stabilisée à l'oxyde d'yttrium.

**Etape $S_1$**

Le procédé selon l'invention comprend une étape $S_1$ de broyage de particules de ferrite $P_1$ avec des billes de broyage $B_1$, pour obtenir des particules de ferrite $P_2$.

De préférence, le broyage de l'étape $S_1$ est un broyage à haute énergie tel que défini ci-dessus. En particulier, le broyage de l'étape $S_1$ est effectué à une énergie $E_1$ supérieure à 1,5 kWh/kg, de préférence supérieure à 2 kWh/kg, de préférence supérieure à 2,5 kWh/kg, de préférence supérieure à 3 kWh/kg.

Avantageusement, le broyage de l'étape $S_1$ est effectué pendant une durée de 2h à 10h et de préférence de 3h à 8h.

De préférence, le broyage de l'étape $S_1$ est effectué avec un broyeur à attrition, préférentiellement un broyeur à attrition contenant des éléments accélérateurs dans l'enceinte de broyage. Préférentiellement lesdits éléments accélérateurs peuvent être du type DYNO®-ACCELERATOR. Par exemple, le broyeur DYNO MILL ECM AP 05 fabriqué par WAB Group peut être utilisé pour le broyage des particules de ferrite $P_1$.

Le diamètre des billes de broyage $B_1$ qui sont utilisées dans l'étape $S_1$ est de préférence compris de 0,3 mm à 1 mm, de préférence de 0,3 mm à 0,8 mm, de préférence de 0,3 mm à 0,6 mm.

Selon un mode de réalisation avantageux, lors de l'étape $S_1$ de broyage les particules de ferrite $P_1$ sont en suspension. Selon ce mode de réalisation, la suspension de particules de ferrite $P_1$ comprend, préférentiellement consiste en, des particules de ferrite $P_1$ et de l'eau déionisée, préférentiellement les particules de ferrite $P_1$ sont présentes à raison d'environ 1,6 kg par litre d'eau déionisée.

Selon un tel mode de réalisation, le procédé peut comprendre l'ajout d'un agent dispersant à la suspension contenant les particules $P_1$ avant le broyage de l'étape $E_1$. L'agent dispersant permet avantageusement d'éviter l'agglomération des particules de ferrite au fur et à mesure que la taille desdites particules est réduite. L'agent dispersant permet ainsi le maintien d'une viscosité de la suspension suffisamment basse pour permettre une bonne efficacité de broyage de ladite suspension alors même que cette dernière présente une concentration élevée en particules de ferrite. Autrement dit, un agent dispersant peut être ajouté à la suspension aqueuse contenant les particules $P_1$ de manière à ce que l'enceinte du broyeur utilisé à l'étape $S_1$ comprenne la suspension aqueuse de particules $P_1$, les billes de broyage $B_1$ et un agent dispersant.

En particulier, l'agent dispersant est un polymère polyélectrolyte. L'agent dispersant est préférentiellement une préparation d'acide carboxylique exempt d'alcali, par exemple il peut s'agir de Dolapix CE64 (Zschimmer & Schwarz GmbH Co., DE).

Lorsqu'il est présent, l'agent dispersant représente de préférence de 0,5 à 4%, de préférence de 1 à 3%, de manière préférée de 1,5 à 2,5% de la masse de la suspension aqueuse contenant les particules $P_1$.

Ainsi, selon un mode de réalisation, lors de l'étape $S_1$ de broyage, les particules de ferrite $P_1$ sont en suspension, préférentiellement en suspension dans de l'eau. Avantageusement, la suspension comprend en outre un agent dispersant, préférentiellement choisi parmi les polymères polyélectrolytes, plus préférentiellement les acides carboxyliques.

Le broyage de l'étape $S_1$ permet d'obtenir des particules de ferrite $P_2$.

Le diamètre $d_{90}$ des particules $P_2$ est inférieur au diamètre $d_{90}$ des particules $P_1$.

De préférence, le diamètre $d_{90}$ des particules $P_2$ est inférieur à 1,5 $\mu$m, de préférence inférieur à 1,0 $\mu$m, de préférence inférieur à 0,8 $\mu$m.

**Etape $S_2$**

Le procédé selon l'invention comprend une étape $S_2$ de broyage de particules de ferrite $P_2$ avec des billes de broyage $B_2$, pour obtenir des particules de ferrite $P_3$.

De préférence, le broyage de l'étape $S_2$ est un broyage à haute énergie tel que défini ci-dessus. En particulier, le broyage de l'étape $S_2$ est effectué à une énergie $E_2$ supérieure à 5 kWh/kg, de préférence supérieure à 5,5 kWh/kg, de préférence supérieure à 6 kWh/kg.

Avantageusement, le broyage de l'étape $S_2$ est effectué pendant une durée de 2h à 10h, et de préférence de 3h à 8h.

De préférence, le broyage de l'étape $S_2$ est effectué avec un broyeur à attrition, préférentiellement un broyeur à attrition contenant des éléments accélérateurs, préférentiellement du type DYNO®-ACCELERATOR, dans l'enceinte de broyage.

Par exemple, le broyeur DYNO MILL ECM AP 05 fabriquée par WAB Group peut être utilisé pour le broyage des particules de ferrite $P_2$.

Le diamètre des billes $B_2$ de broyage qui sont utilisées dans l'étape $S_2$ est de préférence inférieur à 0,3 mm, de préférence inférieur à 0,2 mm, de préférence inférieur ou égal à 0,1 mm.

Selon un mode de réalisation, le diamètre des billes $B_1$ est strictement supérieur au diamètre des billes $B_2$.

Selon un mode de réalisation, lors de l'étape $S_2$ de broyage, les particules de ferrite $P_2$ sont en suspension, préférentiellement en suspension dans de l'eau. Avantageusement, la suspension comprend en outre un agent dispersant, préférentiellement choisi parmi les polymères polyélectrolytes, plus préférentiellement les acides carboxyliques.

Selon un tel mode de réalisation, le procédé comprend donc l'ajout d'un agent dispersant à la suspension aqueuse contenant les particules $P_2$ avant le broyage de l'étape $S_2$. Autrement dit, un agent dispersant peut être ajouté à la suspension aqueuse contenant les particules $P_2$ de manière à ce que l'enceinte du broyeur de l'étape $S_2$ comprenne la suspension aqueuse de particules $P_2$, les billes de broyage $B_2$, et un agent dispersant.

En particulier, l'agent dispersant est un polymère polyélectrolyte. L'agent dispersant est préférentiellement une préparation comprenant de l'acide carboxylique, avantageusement de l'acide carboxylique exempt d'alcali, par exemple le Dolapix CE64 (Zschimmer & Schwarz GmbH Co., DE).

Lorsqu'il est présent, l'agent dispersant représente de préférence entre 0,1 et 3%, de préférence entre 0,3 et 2,5%, de manière préférée entre 0,5 et 2% de la masse de la suspension aqueuse contenant les particules $P_2$.

Le broyage de l'étape $S_2$ permet d'obtenir des particules de ferrite $P_3$.

Le diamètre $d_{90}$ des particules $P_3$ est inférieur au diamètre $d_{90}$ des particules $P_2$.

De préférence, le diamètre $d_{90}$ des particules $P_3$ est inférieur à 200 nm, de préférence inférieur à 150 nm, de préférence inférieur à 120 nm.

De préférence, le diamètre $d_{50}$ des particules $P_3$ est inférieur à 100 nm, de préférence inférieur à 80 nm et/ou le diamètre $d_{10}$ des particules $P_3$ est inférieur à 60 nm, de préférence inférieur à 50 nm.

Avantageusement, les particules $P_3$ ont une surface spécifique d'au moins 20 m$^2$/g, de préférence d'au moins 30 m$^2$/g, de préférence d'au moins 40 m$^2$/g, de préférence d'au moins 60 m$^2$/g, de préférence d'au moins 70 m$^2$/g.

De préférence, le procédé selon l'invention permet d'obtenir un volume d'au moins 60%, de préférence d'au moins 75%, de préférence d'au moins 85% de particules $P_3$ ayant un diamètre inférieur à 100 nm, par rapport au volume total des particules $P_3$ obtenues.

*Etapes supplémentaires*

Selon un mode de réalisation, le procédé selon l'invention comprend en outre au moins une étape de mise en forme des particules $P_3$ à la suite de l'étape $S_2$, en matériau solide.

Ainsi, selon un mode de réalisation du procédé, l'étape $S_2$ est suivie d'une étape de pressage, de préférence de pressage uniaxial et/ou un pressage isostatique, des particules de ferrite $P_3$.

Avantageusement, l'étape de pressage est précédée d'une étape d'enrobage ou d'atomisation des particules de ferrite $P_3$ pour améliorer le comportement de la poudre de particules $P_3$ lors de l'étape de pressage. Selon ce mode de réalisation, le procédé selon l'invention comprend donc :

_ une étape $S_1$ de broyage de particules de ferrite $P_1$ avec des billes de broyage $B_1$, pour obtenir des particules de ferrite $P_2$,

le diamètre $d_{90}$ des particules de ferrite $P_2$ étant inférieur au diamètre $d_{90}$ des particules $P_1$, ladite étape $S_1$ étant effectuée à une énergie $E_1$ supérieure à 1,5 kWh/kg, de préférence supérieure à 2 kWh/kg, de préférence supérieure à 2,5 kWh/kg, de préférence supérieure à 3 kWh/kg, et

_ une étape $S_2$ de broyage des particules de ferrite $P_2$ avec des billes de broyage $B_2$, pour obtenir des particules de ferrite $P_3$,

le diamètre $d_{90}$ des particules de ferrite $P_3$ étant inférieur au diamètre $d_{90}$ des particules $P_2$, ladite étape $S_2$ étant effectuée à une énergie $E_2$ supérieure à 5 kWh/kg, de préférence supérieure à 5,5 kWh/kg, de préférence supérieure à 6 kWh/kg,

et le diamètre des billes $B_1$ étant supérieur au diamètre des billes $B_2$ ;

_ une étape d'enrobage ou d'atomisation des particules de ferrite $P_3$ ; et
_ une étape de pressage, de préférence de pressage uniaxial et/ou un pressage isostatique, des particules de ferrite $P_3$ enrobées ou atomisées.

De préférence, l'étape de mise en forme des particules $P_3$ en matériau solide se fait par pressage.

De préférence, le pressage réalisé est un pressage uni-axial. Alternativement, le pressage uni-axial et suivi d'un pressage isostatique. Alternativement, le pressage réalisé est un pressage isostatique. Le pressage permet une mise en forme des particules de ferrite $P_3$ sous forme d'un matériau. Le matériau se présente préférentiellement sous forme de plaques, de disques, de cylindres ou de tores.

Avantageusement, le procédé selon l'invention comprend une étape d'enrobage ou d'atomisation des particules $P_3$ avant leur mise en forme. Cette étape d'enrobage ou d'atomisation est avantageusement réalisée avec l'ajout de liant(s) et/ou de plastifiant(s). De préférence, le liant est un alcool polyvinylique (PVA), par exemple l'OPTAPIX PAF 35. De préférence, le plastifiant est un Polyéthylèneglycol, par exemple le PEG 400. L'étape d'enrobage ou d'atomisation, ainsi que le(s) liant(s) et/ou plastifiant(s) mis en œuvre dans cette étape, sont bien connus de l'homme du métier. Les liants et plastifiants sont des agents organiques typiquement utilisés pour améliorer le comportement d'une poudre céramique dans l'étape de pressage (remplissage des moules avec la poudre, fluage de granules pendant le pressage, réduction de la pression nécessaire pour obtenir une densité donnée de la pièce au pressage, résistance accrue de la pièce pressée, ...). Un tel comportement est notamment important dans un procédé de pressage industriel et/ou pour la fabrication des grandes pièces.

Selon un mode de réalisation, l'étape de pressage des particules de ferrite $P_3$ est en outre suivie d'un traitement thermique du matériau ainsi mis en forme.

En particulier, le traitement thermique du matériau mis en forme est un frittage. De préférence, le frittage est réalisé à une température de palier allant de 800°C à 1000°C. Avantageusement, le frittage est réalisé à une température de palier inférieure à 1000°C, de préférence inférieure à 940°C, de manière encore plus préférée allant de 800°C à 900°C ou de 800°C à 850°C.

Typiquement, le frittage est réalisé sous atmosphère oxydante, par exemple à l'air.

En particulier, le frittage comprend une période de chauffage par paliers allant de 175°C à 375°C, chaque palier ayant une durée comprise entre 1 heure et 48 heures. Ces paliers entre 175°C et 375°C servent à réaliser le brûlage et l'élimination des composants organiques tels que les dispersants, liants et/ou plastifiants susceptibles d'avoir été introduits dans les étapes de broyage, enrobage et/ou atomisation des particules de ferrite.

*Matériau obtenu*

Le procédé selon l'invention permet d'obtenir un matériau magnéto-diélectrique ferrite.

De préférence, le matériau obtenu a une permittivité diélectrique relative $\varepsilon_r$ supérieure à 1 et/ou une perméabilité magnétique relative $\mu_r$ supérieure à 1. De préférence, le procédé selon l'invention permet d'obtenir un matériau magnéto-diélectrique ferrite de permittivité diélectrique $\varepsilon_r$ comprise entre 3 et 30, de préférence entre 6 et 22 et de perméabilité magnétique $\mu_r$ comprise entre 2 et 40, de préférence entre 4 et 30.

On entend par « permittivité diélectrique relative, $\varepsilon_r$ » la résistance d'un matériau à produire un champ électrique ($\varepsilon_r = \varepsilon / \varepsilon_0$, où $\varepsilon$ est la permittivité du matériau et $\varepsilon_0$ est une constante et correspond à la permittivité du vide).

La permittivité diélectrique est préférentiellement évaluée sur la base de la théorie des perturbations, appliquée à une cavité rectangulaire.

La méthode d'analyse de la permittivité diélectrique est préférentiellement la suivante.

Le montage utilisé pour l'analyse est constitué des éléments suivants : synthétiseur 10 MHz - 26,5 GHz HP8340A, cavité 22,92 x 10,20, x 90,02 de fréquence de résonance à vide 8235 MHz The Wave Solution PS-16-SBB-402-402-B-M90 en laiton argenté avec brides UBR100, détecteur 10MHz - 26,5GHz HP85025B, analyseur scalaire HP8757A.

La cavité de mesure est formée d'un tronçon de guide normalisé « WR90 » bande (section interne WR90 = 22.92 x 10.20 mm$^2$), fermé aux extrémités par des plaques percées de trous de 4 mm de diamètre. Elle est couplée par les trous en entrée à la source hyperfréquence HF synthétisée, et en sortie avec le détecteur vers l'analyseur. On introduit en son centre au maximum du champ électrique HF, un échantillon du matériau fritté et usiné sous forme de barreau à section constante circulaire de diamètre ~1 mm, précédemment étuvé entre 150°C et 200°C pendant au moins 30 min. La mesure est réalisée à une bande de fréquence autour de la fréquence de résonance de la cavité vide, 8235 MHz. On mesure la fréquence et la largeur du pic de résonance à mi-hauteur avec la cavité de mesure vide puis en présence du barreau. La permittivité diélectrique relative, $\varepsilon_r$, est calculée à partir des valeurs des fréquences de résonance, mesurées avec la cavité à vide et la cavité contenant l'échantillon, et à partir du volume de la cavité et de celui de l'échantillon en barreau utilisé pour la mesure dans la cavité.

On entend par « perméabilité magnétique relative, $\mu_r$ », la capacité d'un matériau à conduire le flux magnétique par rapport au vide ($\mu_r = \mu / \mu_0$, où $\mu$ est la perméabilité magnétique du matériau et $\mu_0$ est une constante et représente la perméabilité magnétique du vide).

L'application d'un flux magnétique crée par un courant électrique alternatif génère un flux magnétique et des pertes magnétiques dans un matériau magnétique. La perméabilité d'un matériau magnétique sous un flux magnétique crée par un courant électrique alternatif est défini comme la perméabilité magnétique relative complexe $\mu_r^*$ dont:

$$\mu_r^* = \mu_r' - i\,\mu_r''$$

où

$\mu_r'$ est la partie réelle de la perméabilité magnétique relative complexe, liée à l'énergie emmagasiné dans le matériau par l'application du flux magnétique crée par un courant électrique alternatif

$\mu r' - i\,\mu_r''$ est la partie imaginaire de la perméabilité magnétique relative complexe, qui correspond à l'énergie dissipée dans le matériau par des différents mécanismes à cause de l'application du flux magnétique crée par un courant électrique alternatif (pertes magnétiques)

et i est un nombre imaginaire dont le carré a la valeur -1

En particulier, le procédé selon l'invention permet d'obtenir un matériau magnéto-diélectrique ferrite présentant de faibles pertes magnétiques à des fréquences comprises entre 1 et 1000 MHz. Par faibles pertes magnétiques, on entend le fait que la tangente de pertes $\tan \delta_\mu$ est inférieure à 0,1. La tangente de pertes est définie comme : $\tan \delta_\mu = \mu_r'' / \mu_r'$.

La perméabilité magnétique relative $\mu r$ et la tangente de pertes magnétiques $\tan \delta_\mu$ ont été obtenues utilisant un analyseur d'impédance « Keysight modèle E4991B » à partir des valeurs d'inductance et d'impédance mesurées dans une cellule coaxial montée sans et avec le matériau magnétique (méthode d'inductance) dans une bande de fréquence de 1MHz à 1000MHz sur des échantillons toriques au format APC7 (Øext7 x Øint3) fabriqués par le procédé selon l'invention.

De préférence, $\tan \delta_\mu$ est inférieure à 0,1 sur la bande de fréquence de 1 à 1000 MHz, de préférence de 1 à 600 MHz, de préférence de 1 à 590 MHz, de préférence de 1 à 250 MHz, de préférence de 1 à 200 MHz, de manière préférée de 1 à 160 MHz. Avantageusement, $\tan \delta_\mu$ est inférieure à 0,08, de préférence inférieure à 0,06, de préférence inférieure à 0,05 sur la bande de fréquence de 1 à 150 MHz.

Un matériau ferrite obtenu par le procédé selon l'invention est par exemple utilisable comme matériau d'antenne sur des bandes de fréquences VUHF, en particulier sur une plage de fréquences comprises de 1 à 1000 MHz, de préférence de 1 à 800 MHz, de préférence de 1 à 600 MHz, de préférence de 1 à 590 MHz, de préférence de 1 à 250 MHz, de préférence de 1 à 200 MHz, de manière préférée de 1 à 160 MHz.

Selon un mode de réalisation, le procédé selon l'invention permet en outre d'obtenir un matériau ferrite présentant une microstructure dont la taille de grains est inférieure à 200 nm, de préférence inférieure à 150 nm, de préférence inférieure à 120 nm, de préférence inférieure à 100 nm.

Préférentiellement, la taille de grains du matériau ferrite fritté est obtenue par analyse d'image de cartographie d'orientation EBSD (Electron BackScattered Diffraction) de la microstructure du matériau réalisé par Microscopie Electronique de Balayage (MEB). La technique de cartographie d'orientation EBSD est très utilisée pour la caractérisation de la microstructure et de la texture cristallographique locale des matériaux polycristallins. La technique de Microscopie Electronique de Balayage permet l'observation et l'obtention d'informations de la surface d'un matériau par le traitement du rayonnement généré par l'interaction du matériau avec un faisceau d'électrons accélérés émit par le Microscope Electronique à Balayage. En l'occurrence, le rayonnement analysé pour générer l'image de cartographie d'orientation correspond aux électrons rétrodiffusés produits par la diffraction d'un faisceau d'électron ayant percuté le matériau à un angle assez important. Un logiciel calcule ensuite l'orientation cristalline du matériau à partir de la figure de diffraction (figure de Kikuchi) et génère une cartographie où chaque grain ou cristallite est représenté par une couleur. Cette cartographie fournit des informations telles que la taille des grains et leur distribution pour former la microstructure du matériau.

Avantageusement, le procédé selon l'invention permet d'obtenir un matériau ferrite présentant la composition suivante :

$$Ni_aZn_bCu_cCo_dMn_eFe_{2-\delta}O_4$$

avec :

$$2(a+b+c+d+e) + 3(2-\delta) = 8$$

$$0,05 \leq b \leq 0,5$$

$$0 \leq c \leq 0,25$$

$$0,005 \leq d \leq 0,25$$

$$0 \leq e \leq 0,1$$

$$0 \leq \delta \leq 0,08.$$

Dans certains modes de réalisation, le matériau présente la composition telle que décrite ci-dessus avec $0,05 \leq b \leq 0,45$ et/ou $0 < \delta \leq 0,08$ (c, d et e sont tels que décrits ci-dessus, le cas échéant b ou $\delta$ est tel que décrit ci-dessus, et $2(a+b+c+d+e) + 3(2-\delta) = 8$).

L'invention a aussi pour objet un matériau ferrite susceptible d'être obtenu par le procédé décrit ci-dessus. Un tel matériau est particulièrement utile dans les antennes VHF, UHF et/ou VUHF.

Plus particulièrement, la présente invention a pour objet un matériau ferrite susceptible d'être obtenu par le procédé décrit ci-dessus, dans lequel l'étape de pressage des particules $P_3$ est suivie d'une étape de frittage réalisée à une température de palier inférieure à 1000°C, de préférence inférieure à 940°C, de manière encore plus préférée allant de 800°C à 900°C ou de 800 à 850°C. Le matériau présente une microstructure dont la taille de grains est inférieure à 200 nm, de préférence inférieure à 150 nm, de préférence inférieure à 120 nm, de préférence inférieure à 100 nm. Un tel matériau présente typiquement une densité comprise dans une gamme allant de 3,7 à 5,3 g/cm$^3$. Le matériau présente préférentiellement une composition telle que décrite ci-dessus.

Avantageusement, l'antenne est adaptée à un fonctionnement entre 1 à 1000 MHz, de préférence de 1 à 800 MHz, de préférence de 1 à 600 MHz, de préférence de 1 à 590 MHz, de préférence de 1 à 250 MHz, de préférence de 1 à 200 MHz, de manière préférée de 1 à 160 MHz.

## Description des figures

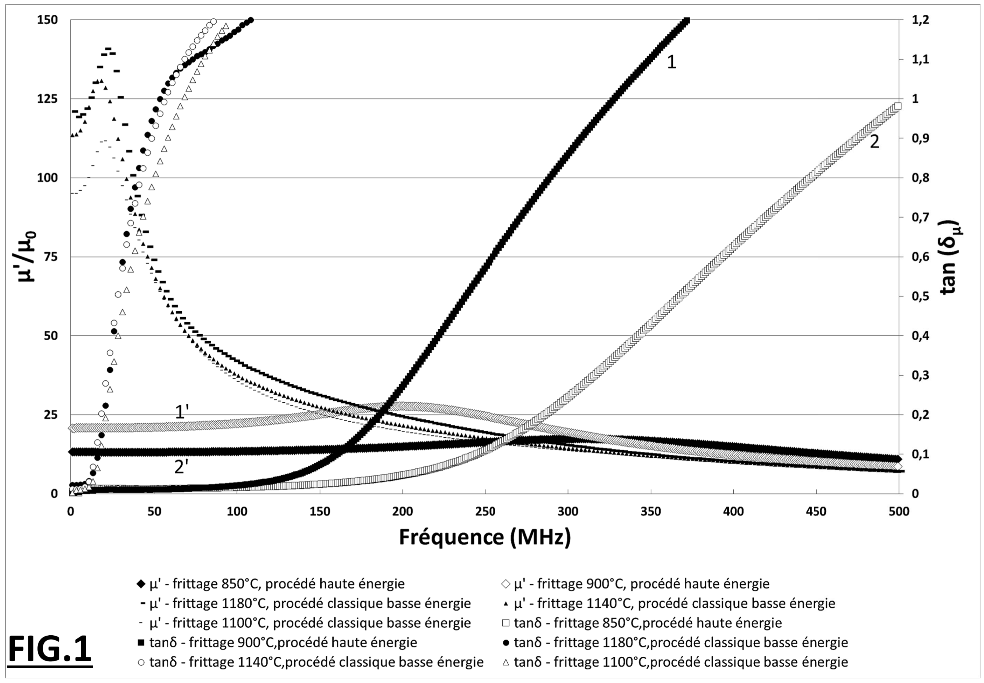

[Fig. 1] La figure 1 est un graphique représentant la perméabilité magnétique et les pertes magnétiques en fonction de la fréquence en MHz pour différents matériaux :

- Les *courbes 1 et* 1' représentent respectivement les pertes magnétiques (« tan$\delta$ - frittage 900°C, procédé haute énergie selon l'invention ») et la perméabilité magnétique (« μ' - frittage 900°C, procédé haute énergie selon l'invention ») d'un matériau obtenu selon le procédé de l'Exemple 2 et fritté à une température de 900°C.
- Les *courbes 2 et 2*' représentent respectivement les pertes magnétiques (« tan$\delta$ - frittage 850°C, procédé haute énergie selon l'invention ») et la perméabilité magnétique (« μ' - frittage 850°C, procédé haute énergie selon l'invention ») d'un matériau obtenu selon le procédé de l'Exemple 2 et fritté à une température de 850°C.
- Les autres courbes représentent les pertes magnétiques et la perméabilité magnétique de matériaux obtenus selon un procédé comparatif basse énergie et fritté à différentes températures (du plus foncé au plus clair : 1180, 1140 et 1100 °C).

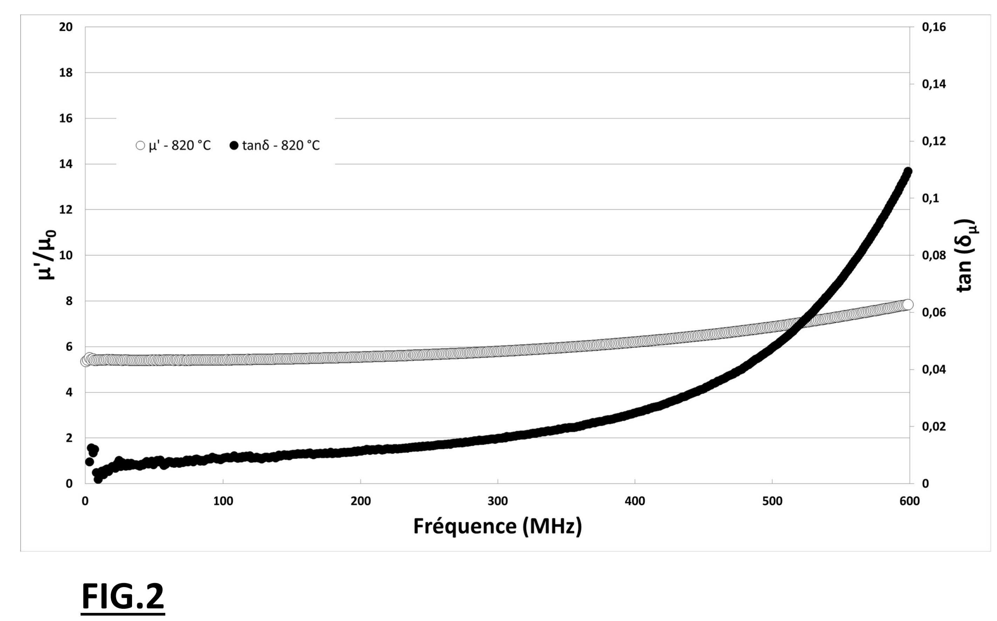

[Fig. 2] La figure 2 est un graphique représentant la perméabilité magnétique et les pertes magnétiques en fonction de la fréquence en MHz pour le matériau obtenu selon le procédé de l'Exemple 3.

**Exemples**

Exemple 1 : Procédé de broyage hors invention

Les matières premières suivantes sont sélectionnées et pesées selon le tableau 1 :

[Tableau 1]

| Matières premières | Masse (g) |
|---|---|
| $Fe_2O_3$ | 1905,66 |
| NiO | 587,07 |
| ZnO | 353,03 |
| $CuCO_3.xH_2O$ | 70,21 |
| $MnCO_3$ | 75,82 |
| $Co_3O_4$ | 8,21 |

*Préparation des particules de ferrites*

Le protocole est le suivant :

- 3,0 $\pm$ 0,1 kg de matières premières telles que détaillées au tableau 1 sont pesés et mises dans une jarre de 8L d'un broyeur tourne-jarre (A. Faure Type 28V30-11) contenant 11,4 kg de billes d'acier 100C6 (fournies par Maridt GmbH) de diamètres variés et selon les quantités approximatives montrés dans le tableau 2 ;
- 3,3 $\pm$ 0,1 L d'eau déionisée et 20 $\pm$ 2 g de dispersant Dolapix CA fourni par Zschimmer & Schwarz GmbH Co., DE sont ajoutés,
- le broyage est effectué pendant une durée de 20 heures,
- la suspension obtenue est ensuite séchée à 200°C pendant 4 à 6h et puis à 120°C pendant environ 14 à 16h jusqu'à ce que le taux d'humidité soit < 0,2% (mesure dans un testeur d'humidité SPEEDY MOISTURE TESTER de THOMAS ASHWORTH).
- la poudre est soumise ensuite à une étape de calcination, à une température de 1050°C pendant 3 heures, puis
- les particules obtenues en sortie de calcination sont broyées pendant une durée de 36 heures dans un broyeur tourne-jarre selon les mêmes conditions que celles du premier broyage, mis à part l'ajout du dispersant (absence d'ajout de dispersant).

Diamètres et quantités approximatives de billes d'acier 100C6 utilisés dans le broyage des matières premières pour la préparation des particules de ferrite :

[Tableau 2]

| Diamètre (mm) | masse billes (kg) |
|---|---|
| 27 à 32 | 6,6 |
| 13 à 15 | 2,1 |
| 9 à 10 | 2,7 |

Les particules de ferrites obtenues ont une surface spécifique entre 2 m²/g et 4 m²/g, un diamètre $d_{90}$ d'environ 30 $\mu$m, et ont la composition suivante : $Ni_{0.602}Zn_{0.34}Cu_{0.05}Co_{0.008}Mn_{0.05}Fe_{1.95}O_4$.

*Broyage des particules de ferrites* :

Les particules de ferrites obtenues ci-dessus sont broyées par un broyeur à jet de vapeur, sous la référence Steam jet mill s-jet 25 de la marque Netzsch.
Le broyage est effectué avec les paramètres suivants :

- Vitesse du séparateur dynamique : 10000 tour/min

- Pression d'air de broyage : 7 bar
- Débit : 59 m$^3$/h

Les particules ainsi obtenues sont observées par Microscopie Electronique de Balayage (MEB) avec l'équipement JEOL JSM-IT200 en mode Electron Rétrodiffusé (BSE) avec tension d'accélération de 5kV, WD (Working Distance) 10 mm. Les particules observées ont un diamètre de l'ordre de 1$\mu$m selon l'analyse visuelle de l'image.

Exemple 2 : Procédé de broyage selon invention

*Préparation des particules de ferrites :*

Le protocole de préparation des particules de ferrite et leur composition sont les mêmes de ceux de l'exemple 1.
Les particules de ferrites $P_1$ ainsi obtenues ont donc une surface spécifique typiquement entre 2 m$^2$/g et 4 m$^2$/g, un diamètre $d_{90}$ d'environ 30 $\mu$m, et ont la composition suivante : $Ni_{0.602}Zn_{0.34}Cu_{0.05}Co_{0.008}Mn_{0.05}Fe_{1.95}O_4$.

*Broyage des particules de ferrites :*

Les particules de ferrites $P_1$ obtenues ci-dessus sont broyées en deux étapes par un broyeur à attrition sous la référence DYNO MILL ECM AP 05 de la marque WAB Group.
Première étape $S_1$ :

- les particules de ferrites $P_1$ sont mises en suspension en barbotine aqueuse, typiquement à raison d'environ 1,6 kg de poudre de ferrite par litre d'eau déionisée,
- 2% en poids par rapport au poids total de la barbotine d'agent dispersant (Dolapix CE64) sont ajoutés à la barbotine,
- la barbotine est broyée pendant 4 heures avec des billes d'oxyde de zirconium yttrié de 0,3 mm de diamètre, avec les paramètres suivants :
- vitesse du broyeur : 12 m/s
- énergie $E_1$ comprise entre 1,8 et 2,1 kWh/kg

A l'issue de l'étape $S_1$, on obtient des particules de ferrite $P_2$.
Deuxième étape $S_2$:

- 0,8% d'agent dispersant (Dolapix CE64) en poids par rapport au poids total est ajouté à la suspension de ferrite broyée (suspension de particules de ferrite $P_2$) dans l'étape précédente,
- la barbotine est broyée pendant 7,5 heures avec des billes d'oxyde de zirconium yttrié de 0,1 mm de diamètre, avec les paramètres suivants :

    - vitesse du broyeur : 14 m/s
    - énergie $E_2$ comprise entre 6,2 et 7,1 kWh/kg

A l'issue de l'étape $S_2$, on obtient des particules de ferrite $P_3$.
Les particules $P_2$ et $P_3$ ainsi obtenues sont observées par Microscopie Electronique de Balayage (MEB) utilisant l'équipement FEI Quanta FEG 650 en mode Large Field Detector Low Vaccum, avec tension d'accélération de 20kV, WD (Working Distance) 10mm, HFW (Horizontal Field Width : Largeur du champ horizontal) 5,60$\mu$m.
La taille des particules $P_3$, est inférieure à 200 nm, selon 20 mesures dimensionnelles réalisés par analyse d'image. En raison de la très faible taille des particules les mesures sont à titre indicatif pour vérifier la cohérence des mesures de distribution de taille de particules par la méthode Laser Scattering Particle Size Distribution.
En outre, les mesures granulométriques et de surface spécifique, réalisées par les différentes techniques décrites auparavant (analyse par diffraction laser à l'aide de l'équipement Laser Scattering Particle Size Distribution Analyser Malvern model Mastersizer 3000 selon le protocole décrit dans la description et par la méthode BET (Brunauer, Emmett and Teller Method) avec l'équipement « Micromeritics FlowSorb II 2300 » selon le protocole décrit dans la description) et utilisées pour la caractérisation des poudres ferrite obtenues selon la présente invention, montrent que les particules $P_3$ obtenues dans l'exemple 2 grâce à ce procédé de broyage haute énergie en deux étapes ont une surface spécifique de 72 m$^2$/g et un diamètre très inférieur à 200 nm.
La distribution granulométrie des particules de ferrites $P_3$ ainsi obtenues est la suivante : $d_{90}$ = 117 nm ; $d_{50}$ = 78 nm et $d_{10}$ = 50 nm. Ces résultats sont cohérents avec les mesures obtenues au MEB.
La distribution granulométrie des particules de ferrites $P_2$ ainsi obtenues est la suivante : $d_{90}$ = 1,149 $\mu$m ; $d_{50}$ = 0,465 $\mu$m et $d_{10}$ = 0,196 $\mu$m. Ces résultats sont cohérents avec les mesures obtenues au MEB.

*Pressage et frittage des particules de ferrites après broyage*

Les particules de ferrites $P_3$ obtenues ci-dessus sont mises en forme par pressage uniaxial sous forme de tores au format APC7. Le matériau mis en forme est ensuite densifié par frittage soit à 850 °C soit à 900 °C.

La microstructure du matériau fritté à 900°C a été observé par MEB-EBSD. L'observation des tailles des grains, i.e du diamètre de la sphère équivalent circonscrite audites particules $d_S = \sqrt{S / \pi}$, où S est la surface de la sphère équivalente, a été réalisé par analyse de la cartographie d'orientation cristalline. Les diamètres équivalents observés est inférieure à 200 nm.

Le tableau 3 montre la distribution des diamètres équivalents de chaque catégorie de taille de grain observée par MEB-EBSD:

[Tableau 3]

| Surf. ($\mu m^2$) | Fraction approx. (%) | Taille de grain $\sqrt{S / \pi}$ (nm) |
|---|---|---|
| 0,005 | 23 | 40 |
| 0,015 | 20 | 69 |
| 0,025 | 17 | 89 |
| 0,035 | 11 | 106 |
| 0,045 | 9 | 120 |
| 0,055 | 6 | 132 |
| 0,065 | 3 | 144 |
| 0,075 | 3 | 155 |
| 0,085 | 1 | 164 |
| 0,095 | 2 | 174 |
| 0,105 | 2 | 183 |
| 0,115 | 1 | 191 |

La perméabilité magnétique des matériaux ainsi obtenus est caractérisée entre 1 et 500 MHz à l'aide d'un impédancemètre Keysight modèle E4991B selon le protocole décrit dans la description. La figure 1 présente la valeur de la perméabilité et de $\tan(\delta_\mu)$ en fonction de la fréquence pour chacun des deux matériaux frittés à 850 °C et 900 °C, ainsi que pour matériau ayant suivi un procédé de fabrication classique céramique et ayant été fritté à trois températures de frittage différentes (1180, 1140 et 1100 °C).

La figure 1 présente la valeur réelle de la perméabilité $\mu'$ et $\tan(\delta\mu)$ (indiquée « $\tan\delta$ ») en fonction de la fréquence pour les deux matériaux obtenus selon l'invention (« procédé haute énergie ») frittés à 850 °C et 900 °C. Entre ces deux températures les performances des matériaux changent. Si on fixe un seuil de perte $\tan(\delta\mu)$ à 0,1, le procédé selon l'invention permet une utilisation du matériau fritté à 850 °C jusqu'à environ 250 MHz avec un $\mu_r$ entre 13 et 16 (sur l'intervalle 1 - 250 MHz) contre 160 MHz avec un $\mu_r$ entre 21 et 25 (sur l'intervalle 1 - 160 MHz) pour le matériau fritté à 900 °C.

On constate donc que les performances des matériaux obtenus selon le procédé de l'invention (« procédé haute énergie ») changent entre les deux températures de frittage. Pour un seuil de perte $\tan(\delta_\mu)$ fixé à 0,1 (faibles pertes magnétiques), le procédé selon l'invention permet une utilisation :

- du matériau fritté à 850 °C jusqu'à environ 250 MHz avec un $\mu_r$ compris entre 13 et 16 (sur l'intervalle 1 - 250 MHz), et
- du matériau fritté à 900 °C jusqu'à environ 160 MHz avec un $\mu_r$ compris entre 21 et 25 (sur l'intervalle 1 - 160 MHz).

En revanche, pour le matériau obtenu à l'exemple 1 par un procédé comparatif (« procédé basse énergie »), on constate que le changement de la température de frittage n'a pas d'impact significatif sur le seuil de perte en fréquence. On remarque effectivement que, quel que soit la température de frittage (1180, 1140 ou 1100 °C), si on fixe un seuil de perte $\tan(\delta_\mu)$ à 0,1 (faibles pertes magnétiques), la fréquence maximale d'utilisation du matériau n'est pas modifiée et reste à 15 MHz dans les trois cas. A savoir que les matériaux qui n'ont pas été obtenus par le procédé selon l'invention ne peuvent pas être frittés à température plus basse puisque leur densification n'est pas suffisante. Un tel matériau est donc inutilisable dans la gamme de fréquence VHF et UHF, contrairement au matériau issu du procédé selon l'invention qui peut être utilisé jusqu'à des fréquences de 160 MHz (fritté à 900°C) ou 250 MHz (fritté à 850°C).

Le procédé selon l'invention permet donc avantageusement d'étendre le domaine d'utilisation en fréquence des matériaux ferrite, et notamment des matériaux de type $Ni_aZn_bCu_cCo_dMn_eFe_{2-\delta}O_4$ tel que décrit ci-dessus, et également d'adapter les caractéristiques du matériau en modulant la température de frittage.

Exemple 3 : Procédé de broyage selon l'invention

Les matières premières suivantes sont sélectionnées et pesées selon le tableau 4 :

[Tableau 4]

| Matières premières | Quantité (g) |
| --- | --- |
| $Fe_2O_3$ | 1910,8 |
| NiO | 677,7 |
| $Co_3O_4$ | 50,4 |
| ZnO | 361,2 |

*Préparation des particules de ferrites :*

Le protocole de préparation des particules de ferrite est le mêmes que celui des exemples 1 et 2, exception faite de la composition de matières premières qui est celle décrite au tableau 4.
Les particules de ferrites $P_1$, obtenues ont une surface spécifique *typiquement entre* 2 m²/g et 4 m²/g, un diamètre $d_{90}$ d'environ 30 μm, et ont la composition suivante : $Ni_{0.684}Zn_{0.34}Co_{0.048}Fe_{1.928}O_4$.

*Broyage des particules de ferrites* :

Les particules de ferrites $P_1$, obtenues ci-dessus sont broyées en deux étapes par un broyeur à attrition sous la référence DYNO MILL ECM AP 05 de la marque WAB Group.
Première étape $S_1$, :

- les particules de ferrites $P_1$, sont mises en suspension en barbotine aqueuse, typiquement à raison d'environ 1,6 kg/L de poudre ferrite / eau déionisée,
- 2% en poids par rapport au poids total de la barbotine d'agent dispersant (Dolapix CE64) est ajouté à la barbotine,
- la barbotine est broyée pendant 5,5 heures avec des billes d'oxyde de zirconium yttrié de 0,3 mm de diamètre, avec les paramètres suivants :
- vitesse du broyeur : 12m/s
- énergie $E_1$ comprise entre 2,8 et 3,3 kWh/kg

A l'issue de l'étape $S_1$, on obtient les particules de ferrites $P_2$.
Deuxième étape $S_2$, :

- 1,7% d'agent dispersant (Dolapix CE64) en poids par rapport au poids total est ajouté à la suspension de ferrite broyée dans l'étape précédente,
- la barbotine est broyée pendant 8 heures avec des billes d'oxyde de zirconium yttrié de 0,1 mm de diamètre, avec les paramètres suivants :
- vitesse du broyeur : 14 m/s
- énergie $E_2$ comprise entre 6,3 et 7,9 kWh/kg

A l'issue de l'étape $S_2$, on obtient les particules de ferrites $P_3$.
Les particules ainsi obtenues sont observées par Microscopie Electronique de Balayage (MEB). Les mesures granulométriques et de surface spécifique ont été réalisées par les différentes techniques décrites auparavant (analyse par diffraction laser à l'aide de l'équipement Laser Scattering Particule Size Distribution Analyser Malvern model Mastersizer 3000 selon le protocole décrit dans la description et par la méthode BET (Brunauer, Emmett and Teller Method) avec l'équipement « Micromeritics FlowSorb II 2300 » selon le protocole décrit dans la description).
Les mesures granulométriques montrent que les particules $P_3$, obtenues grâce à ce procédé de broyage haute énergie en deux étapes, selon l'invention, ont une surface spécifique de 91 m²/g et un diamètre inférieur à 150 nm (analyse MEB).

La distribution granulométrie des particules de ferrites $P_3$, ainsi obtenues est la suivante : $d_{90}$ = 106 nm ; $d_{50}$ = 68 nm et $d_{10}$ = 40 nm.

La distribution granulométrie des particules de ferrites $P_2$, ainsi obtenues est la suivante : $d_{90}$ = 0,769 $\mu$m ; $d_{50}$ = 0,420 $\mu$m et $d_{10}$ = 0,157 $\mu$m.

*Pressage et frittage des particules de ferrites après broyage*

La poudre de particules ferrite $P_3$, obtenues ci-dessus est mise en forme par pressage uniaxial sous forme de tores au format APC7. Le matériau mis en forme est ensuite densifié par frittage à 820°C.

La perméabilité magnétique du matériau ainsi obtenu est caractérisée à l'aide d'un impédancemètre Keysight modèle E4991B entre 1 et 600 MHz selon le protocole décrit précédemment. La figure 2 présente la valeur de la perméabilité et de $\tan(\delta_\mu)$ en fonction de la fréquence de ce matériau.

On constate que pour un seuil de perte $\tan(\delta_\mu)$ fixé à 0,1, le procédé selon l'invention permet une utilisation de ce matériau jusqu'à environ 590 MHz avec un $\mu_r$ compris entre 5 et 8 (sur l'intervalle 1 - 590 MHz). Un tel matériau est donc utilisable dans la gamme de fréquence VHF, et même au-delà.

En faisant varier la composition d'un matériau fabriqué selon le procédé de l'invention, on peut augmenter les gammes de fréquences dans lesquelles il est utilisable. On peut donc fabriquer, avec le procédé de l'invention, des matériaux qui peuvent fonctionner dans des gammes de fréquences VHF et UHF.

**Revendications**

1. Procédé de préparation d'un matériau ferrite, le procédé comprenant les étapes suivantes :

   - une étape $S_1$ de broyage de particules de ferrite $P_1$ avec des billes de broyage $B_1$, pour obtenir des particules de ferrite $P_2$,

      le diamètre $d_{90}$ des particules de ferrite $P_2$ étant inférieur au diamètre $d_{90}$ des particules $P_1$,
      ladite étape $S_1$ étant effectuée à une énergie $E_1$ supérieure à 1,5 kWh/kg, de préférence supérieure à 2 kWh/kg, de préférence supérieure à 2,5 kWh/kg, de préférence supérieure à 3 kWh/kg, et

   - une étape $S_2$ de broyage des particules de ferrite $P_2$ avec des billes de broyage $B_2$, pour obtenir des particules de ferrite $P_3$,

      le diamètre $d_{90}$ des particules de ferrite $P_3$ étant inférieur au diamètre $d_{90}$ des particules $P_2$,
      ladite étape $S_2$ étant effectuée à une énergie $E_2$ supérieure à 5 kWh/kg, de préférence supérieure à 5,5 kWh/kg, de préférence supérieure à 6 kWh/kg,
      et le diamètre des billes $B_1$ étant supérieur au diamètre des billes $B_2$.

2. Procédé selon la revendication 1, dans lequel les particules de ferrite $P_1$ comprennent, préférentiellement consistent en, des particules d'oxyde de fer ($Fe_2O_3$) et d'un ou de plusieurs oxydes choisis parmi l'oxyde de nickel (NiO), l'oxyde de cobalt (CoO), l'oxyde de zinc (ZnO), l'oxyde de manganèse (MnO) et l'oxyde de cuivre (CuO).

3. Procédé selon la revendication 1 ou 2, dans lequel les particules de ferrite $P_1$ ont une surface spécifique d'au moins 2 $m^2$/g, de préférence d'au moins 2,5 $m^2$/g, encore plus préférentiellement d'au moins 3 $m^2$/g.

4. Procédé selon l'une quelconque des revendications précédentes, dans lequel le diamètre $d_{90}$ des particules de ferrite $P_1$ est inférieur à 50 $\mu$m, de préférence inférieur à 40 $\mu$m, encore plus préférentiellement inférieur ou égal à 30 $\mu$m.

5. Procédé selon l'une quelconque des revendications précédentes, dans lequel le diamètre $d_{90}$ des particules de ferrite $P_2$ est inférieur à 1,5 $\mu$m, de préférence inférieur à 1,0 $\mu$m, encore plus préférentiellement inférieur à 0,8 $\mu$m.

6. Procédé selon l'une quelconque des revendications précédentes, dans lequel le diamètre $d_{90}$ des particules de ferrite $P_3$ est inférieur à 200 nm, de préférence inférieur à 150 nm, encore plus préférentiellement inférieur à 120 nm.

7. Procédé selon l'une quelconque des revendications précédentes, dans lequel les particules de ferrite $P_3$ ont une surface spécifique d'au moins 20 $m^2$/g, de préférence d'au moins 30 $m^2$/g, encore plus préférentiellement d'au moins 40 $m^2$/g, ou d'au moins 60 $m^2$/g, ou d'au moins 70 $m^2$/g.

**8.** Procédé selon l'une quelconque des revendications précédentes, dans lequel le diamètre des billes $B_1$ est compris de 0,3 mm à 1 mm, de préférence de 0,3 mm à 0,8 mm, encore plus préférentiellement de 0,3 mm à 0,6 mm.

**9.** Procédé selon l'une quelconque des revendications précédentes, dans lequel le diamètre des billes $B_2$ est inférieur à 0,3 mm, de préférence inférieur à 0,2 mm, encore plus préférentiellement inférieur ou égal à 0,1 mm.

**10.** Procédé selon l'une quelconque des revendications précédentes, dans lequel les billes $B_1$ et $B_2$ sont des billes d'oxyde de zirconium.

**11.** Procédé selon l'une quelconque des revendications précédentes, tel que lors de l'étape et/ou des étapes $S_1$ et/ou $S_2$ de broyage les particules de ferrite $P_1$ et/ou $P_2$ sont en suspension, préférentiellement en suspension dans de l'eau.

**12.** Procédé selon la revendication 11, tel que la et/ou les suspensions comprennent en outre un agent dispersant, préférentiellement choisi parmi les polymères polyélectrolytes, plus préférentiellement les acides carboxyliques.

**13.** Procédé selon l'une quelconque des revendications précédentes, dans lequel les particules de ferrite $P_1$ sont obtenues par une étape de calcination de poudre d'oxydes et/ou de carbonates, ladite étape de calcination étant effectuée de préférence à une température allant de 800°C à 1100°C et, préférentiellement, pendant une durée allant de 2h à 4h.

**14.** Procédé selon l'une quelconque des revendications précédentes, dans lequel l'étape $S_2$ est suivie d'une étape de pressage, de préférence de pressage uniaxial et/ou un pressage isostatique, des particules de ferrite $P_3$, pour obtenir un matériau ferrite.

**15.** Procédé selon la revendication 14, dans lequel l'étape de pressage est précédée d'une étape d'enrobage ou d'atomisation des particules de ferrite $P_3$.

**16.** Procédé selon la revendication 14 ou 15, dans lequel l'étape de pressage des particules $P_3$ est suivie d'une étape de frittage.

**17.** Procédé selon la revendication 16, dans lequel l'étape de frittage est réalisée à une température de palier inférieure à 1000°C, de préférence inférieure à 940°C, de manière encore plus préférée allant de 800°C à 900°C.

**18.** Procédé selon l'une quelconque des revendications 14 à 17, dans lequel le matériau ferrite obtenu présente la composition suivante :

$$Ni_aZn_bCu_cCo_dMn_eFe_{2-\delta}O_4$$

avec :

$$2(a+b+c+d+e) + 3(2-\delta) = 8$$

$$0,05 \leq b \leq 0,5$$

$$0 \leq c \leq 0,25$$

$$0,005 \leq d \leq 0,25$$

$$0 \leq e \leq 0,1$$

$$0 \leq \delta \leq 0,08.$$

**19.** Matériau ferrite susceptible d'être obtenu par le procédé selon la revendication 17, **caractérisé en ce qu'**il présente une microstructure dont la taille de grains est inférieure à 200 nm, de préférence inférieure à 150 nm, encore plus préférentiellement inférieure à 120 nm ou inférieure à 100 nm.

**FIG.1**

**FIG.2**

Europäisches
Patentamt

European
Patent Office

Office européen
des brevets

**RAPPORT DE RECHERCHE EUROPEENNE**

Numéro de la demande

**EP 25 22 5066**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | MATHUR P ET AL: "Sustained electromagnetic properties of Ni-Zn-Co nanoferrites for the high-frequency applications", MATERIALS LETTERS, ELSEVIER, AMSTERDAM, NL, vol. 64, no. 24, 31 décembre 2010 (2010-12-31), pages 2738-2741, XP027424146, ISSN: 0167-577X, DOI: 10.1016/J.MATLET.2010.08.056 [extrait le 2010-08-26] * partie 3.3 * ----- | 19 | INV. C04B35/26 C01G49/00 C04B35/626 H01F1/00 H01F1/34 |
| A | EHRHARDT H ET AL: "Structural evolution of ball-milled ZnFe"2O"4", JOURNAL OF ALLOYS AND COMPOUNDS, ELSEVIER SEQUOIA, LAUSANNE, CH, vol. 339, no. 1-2, 13 juin 2002 (2002-06-13), pages 255-260, XP004353704, ISSN: 0925-8388, DOI: 10.1016/S0925-8388(01)02011-4 * experimental * ----- | 1-18 | |
| | | | DOMAINES TECHNIQUES RECHERCHES (IPC) |
| A | CN 108 147 805 A (SHENZHEN WANJIA INTERDYNAMIC TECH CO LTD) 12 juin 2018 (2018-06-12) * exemple 2 * ----- | 1-18 | C04B C01G H01F |

Le présent rapport a été établi pour toutes les revendications

| Lieu de la recherche | Date d'achèvement de la recherche | Examinateur |
|---|---|---|
| La Haye | 4 mai 2026 | Raming, Tomas |

EPO FORM 1503 03.82 (P04C02)

# EP 4 763 824 A1

## ANNEXE AU RAPPORT DE RECHERCHE EUROPEENNE
## RELATIF A LA DEMANDE DE BREVET EUROPEEN NO.

EP 25 22 5066

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

04-05-2026

| Document brevet cité au rapport de recherche | Date de publication | Membre(s) de la famille de brevet(s) | Date de publication |
|---|---|---|---|
| CN 108147805 A | 12-06-2018 | AUCUN | |

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **R. K. MONGIA** ; **A. ITTIPIBOON** ; **M. CUHACI**. Low profile dielectric resonator antenna using a very high permittivity material. *Electron. Lett.*, 1994, vol. 30 (17), 1362-1663
- **M.A.C NIAMIEN** ; **S. COLLARDEY** ; **A. SHARAIHA** ; **K. MAHDJOUBI**. Compact Expressions for Efficiency and Bandwidth of Patch Antennas Over Lossy Magneto-Dielectric Materials. *IEEE antennas and wireless propaga. letters*, 2011, vol. 10, 63-66

- **A. SAINI** ; **K. RANA** ; **A. THAKUR** ; **P. THAKUR** ; **J-L. MATTEI** ; **P. QUEFFELEC**. Low loss Composite nano ferrite with matching permittivity and permeability in UHF band. *Materials Research Bulletin*, 2016, vol. 76, 94-99